# EUROPÄISCHE PATENTANMELDUNG

(11) **EP 1 710 136 A1**
(43) Veröffentlichungstag der Anmeldung: **11.10.2006**
(21) Anmeldenummer: 05014539.0
(22) Anmeldetag: 05.07.2005
(51) Int. Cl.: B60R 21/20

(54) **Luftsackmodul für ein Kraftfahrzeug**

(30) Priorität: 06.04.2005 EP 05007554
(71) Anmelder: Delphi Technologies, Inc., Troy, MI 48007 (US)
(72) Erfinder: Tessarek, Artur, 44797 Bochum (DE); Maiwald, Helmut, 51515 Kürten (DE); Guthke, Detlev, 58089 Hagen (DE)
(74) Vertreter: Manitz, Finsterwald & Partner GbR

(57) **Zusammenfassung**

Die Erfindung betrifft ein Luftsackmodul für ein Kraftfahrzeug mit einem aufblasbaren Luftsack, der im Montagezustand zu einem Paket zusammengefaltet ist, das von einem lediglich stellenweise wirksamen Haltemittel zusammengehalten ist, welches verglichen mit der Paketoberfläche kleine Abmessungen aufweist und zumindest einen zusammenhängenden, verglichen mit den Abmessungen des Haltemittels großen Bereich der Paketoberfläche freilässt.

## Beschreibung

Die Erfindung betrifft ein Luftsackmodul für ein Kraftfahrzeug mit einem aufblasbaren Luftsack, der im Montagezustand zu einem Paket zusammengefaltet ist.

Ein derartiges Luftsackmodul ist grundsätzlich bekannt. Ist ein solches Luftsackmodul zur Befestigung an einem Dachrahmen des Kraftfahrzeugs vorgesehen, so wird es auch "roof rail airbag" genannt. Üblicherweise umfasst ein bekanntes Luftsackmodul eine Hülle aus einem harten oder weichen Material, die den zusammengefalteten Luftsack gehäuse- oder strumpfartig umgibt und das Luftsackpaket zusammenhält.

Als problematisch erweist sich bei einem solchen Luftsackmodul der wirtschaftliche Aufwand bei der Herstellung und Montage der Luftsackhülle. Darüber hinaus kann insbesondere eine aus einem festen Material gebildete Luftsackhülle die Baugröße und somit den Platzbedarf des Luftsackmoduls erheblich erhöhen, was sich beim Einbau des Luftsackmoduls in ein Kraftfahrzeug, insbesondere im Bereich eines Dachrahmens des Kraftfahrzeugs, nachteilig auswirken kann.

Der Erfindung liegt die Aufgabe zugrunde, ein Luftsackmodul zu schaffen, welches mit einem geringeren wirtschaftlichen Aufwand herstellbar ist und eine geringere Baugröße aufweist.

Zur Lösung der Aufgabe ist ein Luftsackmodul mit den Merkmalen des Anspruchs 1 vorgesehen.

Das erfindungsgemäße Luftsackmodul umfasst einen aufblasbaren Luftsack, der im Montagezustand zu einem Paket zusammengefaltet ist, das von einem lediglich stellenweise wirksamen Haltemittel zusammengehalten ist, welches verglichen mit der Paketoberfläche kleine Abmessungen aufweist und zumindest einen zusammenhängenden, verglichen mit den Abmessungen des Haltemittels großen Bereich der Paketoberfläche freilässt.

Der Erfindungsgedanke besteht mit anderen Worten darin, das zusammengefaltete Luftsackpaket nicht vollständig in ein steifes Gehäuse einzuschließen oder mit einer strumpfartigen Hülle zu überziehen, sondern ein vergleichsweise kleines Haltemittel vorzusehen, welches lediglich stellenweise mit dem zusammengefalteten Luftsackpaket zusammenwirkt, um dieses zusammenzuhalten.

Das Haltemittel weist verglichen mit der Paketoberfläche kleine Abmessungen auf und lässt zumindest einen zusammenhängenden, verglichen mit den Abmessungen des Haltemittels großen Bereich der Paketoberfläche frei. Das Haltemittel überdeckt somit lediglich einen kleinen Anteil der Oberfläche des zusammengefalteten Luftsackpakets. Optimalerweise sind die Abmessungen des Haltemittels nicht wesentlich größer als für ein wirksames Zusammenhalten des Pakets nötig.

Bei der Herstellung des erfindungsgemäßen Luftsackmoduls muss also weder ein Gehäuse zum Zusammenhalten des Luftsackpakets bereitgestellt werden, noch das Luftsackpaket mit einer strumpfartigen Hülle überzogen werden. Vielmehr wird nach dem Zusammenfalten des Luftsacks das Luftsackpaket lediglich durch ein vergleichsweise kleines Haltemittel, das an einer geeigneten Stelle des zusammengefalteten Luftsackpakets angebracht ist, zusammengehalten. Dadurch ist die Herstellung des Luftsackmoduls erheblich vereinfacht und somit sowohl hinsichtlich der Material- als auch der Montagekosten reduziert.

Das Haltemittel kann bereits bei der Herstellung des Luftsacks an diesem angebracht werden, indem beispielsweise ein Ende des Haltemittels an den Luftsack angenäht wird. Das Haltemittel kann auch dadurch ein integraler Bestandteil der Luftsackhülle sein, dass es beim Zuschneiden oder Zusammennähen der Luftsackhülle mit ausgebildet wird. Separate Haltemittel werden so nicht benötigt. Im zusammengefalteten Zustand des Luftsacks braucht dann lediglich noch das Haltemittel insbesondere mit einem freien Ende an geeigneter Stelle am Luftsack fixiert zu werden, um das Luftsackpaket zusammenzuhalten. Die Herstellung des Luftsackmoduls wird auf diese Weise noch weiter vereinfacht und hinsichtlich der Material- und Montagekosten noch weiter reduziert.

Darüber hinaus trägt das Haltemittel aufgrund seiner kleinen Abmessungen nicht wesentlich auf, d.h. die Baugröße des Luftsackmoduls wird durch das Haltemittel nicht wesentlich erhöht. Die Abmessungen des Luftsackmoduls sind mit anderen Worten durch die Größe und Form des zusammengefalteten Luftsackpakets vorgegeben. Das Luftsackmodul kann also besonders Platz sparend in ein Kraftfahrzeug eingebaut werden. Dies erweist sich besonders dann als vorteilhaft, wenn das Luftsackmodul als ein so genannter "roof rail airbag" im Bereich eines Dachrahmens des Kraftfahrzeugs eingebaut werden soll, da hier typischerweise besonders wenig Platz zur Verfügung steht.

Vorteilhafte Ausführungsformen der Erfindung sind den Unteransprüchen, der Beschreibung und der Zeichnung zu entnehmen.

Bevorzugt ist das Haltemittel unter Ausnutzung einer dem Luftsackpaket zumindest im freigelassenen Bereich innewohnenden Formstabilität positioniert. Das Haltemittel ist mit anderen Worten so an dem Luftsackpaket angebracht, dass das Paket trotz der kleinen Abmessungen des Haltemittels wirksam zusammengehalten wird und sich nicht etwa unbeabsichtigt entfalten oder anders verformen, z.B. durchbiegen, kann.

Das Haltemittel kann streifenförmig mit einer Breite ausgebildet sein, die wesentlich kleiner als die Länge und/oder der Umfang des Luftsackpakets ist. Ein derartiges streifenförmiges Haltemittel weist nicht nur besonders kleine Abmessungen auf, sondern es lässt sich auch besonders vielseitig einsetzen und beispielsweise parallel oder quer zu einer Längserstreckung des Luftsackpakets an diesem anbringen.

Vorzugsweise ist der Luftsack nach Art einer Rollfaltung zusammengefaltet. Die Rollfaltung ermöglicht nicht nur eine besonders einfache Herstellung des Luftsackpakets und somit letztlich des Luftsackmoduls, nämlich durch einfaches Aufwickeln oder Aufrollen des Luftsacks, sondern sie ermöglicht auch eine besonders schnelle Expansion des Luftsacks im Falle einer Aktivierung des Luftsackmoduls bei einem Unfall. Darüber hinaus weist ein nach Art einer Rollfaltung zusammengefaltetes Luftsackpaket eine besonders hohe Formstabilität auf. Diese ist vor allem in Längsrichtung des Luftsackpakets, d.h. in Richtung der Rollachse, besonders hoch, wodurch das zusammengefaltete Luftsackpaket selbst durch ein lediglich stellenweise wirksames Haltemittel zuverlässig zusammenhaltbar ist.

Grundsätzlich ist die Art der Faltung des Luftsacks beliebig, sie kann anstelle einer Rollfaltung beispielsweise auch als U-Faltung oder als eine Kombination von U- und Rollfaltung ausgebildet sein. Entscheidend ist, dass der zusammengefaltete Luftsack an wenigstens einer Stelle paketartig verschließbar ist.

Gemäß einer vorteilhaften Ausbildung der Erfindung umgibt das Haltemittel das Luftsackpaket manschettenartig. Dadurch ist das Luftsackpaket besonders sicher zusammengehalten.

Bevorzugt umfasst das Haltemittel eine oder mehrere zueinander beabstandete Schlaufen. Durch ein derartiges Haltemittel ist die Herstellung des Luftsackmoduls noch weiter vereinfacht. Dabei muss eine Schlaufe im Sinne der Erfindung weder geschlossen sein, noch das Luftsackpaket vollständig umgeben. Vielmehr gilt auch ein solches Haltemittel als Schlaufe, welches das Luftsackpaket z.B. zumindest zur Hälfte umgibt. In diesem Fall bildet gewissermaßen der verbleibende Abschnitt des Luftsacks selbst einen Teil der Schlaufe.

Der zusammengefaltete Luftsack kann im Bereich seitlicher Enden jeweils von einer Schlaufe oder Manschette umgeben sein. Bei einer derartigen Anordnung der Schlaufen bzw. Manschetten ist ein, insbesondere nach Art einer Rollfaltung zusammengefalteter, Luftsack besonders sicher zusammengehalten. Insbesondere wird bei einer derartigen Anordnung der Schlaufen bzw. Manschetten die aus der Rollfaltung resultierende Eigenstabilität des Luftsackpakets optimal ausgenutzt.

Besonders vorteilhaft ist es, wenn wenigstens ein Ende der oder jeder Schlaufe bzw. Manschette an einem insbesondere laschenartigen Befestigungsabschnitt des Luftsacks angebracht ist, welcher zur Befestigung des Luftsacks an einem Kraftfahrzeug, insbesondere an einem Dachrahmen des Kraftfahrzeugs, vorgesehen ist. Vorzugsweise ist der Befestigungsabschnitt ein integraler Bestandteil der Luftsackhülle. Der Befestigungsabschnitt des Luftsacks erfüllt eine Doppelfunktion, indem er nicht nur zur Befestigung des Luftsacks an dem Kraftfahrzeug, sondern auch zur Fixierung der oder jeder Schlaufe bzw. Manschette dient. Dies vereinfacht die Herstellung des Luftsackmoduls noch weiter und reduziert insbesondere die bei der Herstellung des Luftsackmoduls anfallenden Material- und Montagekosten.

Das Ende der oder jeder Manschette bzw. Schlaufe kann mittels eines zur Befestigung des Luftsackmoduls in dem Kraftfahrzeug vorgesehenen Befestigungsmittels, z.B. eines Clips, einer Schraube oder einer Niete, an dem Befestigungsabschnitt des Luftsacks angebracht sein. Das Befestigungsmittel wird mit anderen Worten nicht nur zur Befestigung des Luftsacks an dem Kraftfahrzeug, sondern gleichzeitig auch zur Befestigung der oder jeder Schlaufe bzw. Manschette an dem Befestigungsabschnitt ausgenutzt. Aufgrund dieser Doppelfunktion des Befestigungsmittels wird die Herstellung des Luftsackmoduls noch weiter vereinfacht und werden die Material- und Montagekosten bei der Herstellung des Luftsackmoduls noch weiter reduziert.

Gemäß einer weiteren bevorzugten Ausbildung der Erfindung deckt das Haltemittel lediglich solche Bereiche des Luftsacks ab, welche an einen durch den zusammengefalteten Luftsack gebildeten Spalt angrenzen. Das Haltemittel überbrückt also den Spalt und hält das zusammengefaltete Luftsackpaket wie ein Verschluss zusammen.

Indem das Haltemittel lediglich an den Spalt angrenzende Bereiche des Luftsacks abdeckt, erstreckt sich das Haltemittel gerade soweit über den Luftsack, wie es für einen sicheren Zusammenhalt des Luftsackpakets erforderlich ist. Dadurch werden minimale Abmessungen des Haltemittels und letztlich eine minimale Baugröße des Luftsackmoduls erreicht.

Vorteilhafterweise überbrückt das Haltemittel den Spalt zumindest abschnittsweise und bevorzugt über annähernd dessen gesamte Länge. Dadurch wird das Luftsackpaket noch sicherer zusammengehalten. Außerdem ist der Spalt vor einem Eindringen von Fremdkörpern geschützt.

Bevorzugt ist das Haltemittel im Bereich eines Endes mittels einer Klebe-, Näh-, Heft- oder Nietverbindung an dem Luftsack befestigt. Das Haltemittel kann aber auch einen integralen Bestandteil der Luftsackhülle bilden und so gewissermaßen aus dem Luftsack selbst hervorgehen. In beiden Fällen kann der Luftsack bereits bei seiner Herstellung mit dem Haltemittel versehen werden. Dies bedeutet eine noch weitere Vereinfachung der Herstellung des Luftsackmoduls.

Gemäß einer weiteren vorteilhaften Ausbildung der Erfindung ist der Luftsack derart zusammengefaltet, dass auf gegenüberliegenden Seiten von insbesondere laschenartigen Befestigungsabschnitten des Luftsacks Paketabschnitte angeordnet sind, welche einen Erstöffnungsbereich definieren, und das Haltemittel lediglich im Erstöffnungsbereich wirksam ist. Gemäß dieser Ausbildung ist der Luftsack also nicht so zusammengefaltet, dass sich das Luftsackpaket lediglich auf einer Seite der Befestigungsabschnitte befindet, sondern die Luftsackhülle ist - anders als beispielsweise bei einer einfachen Rollfaltung z.B. durch mehrfaches Umschlagen so gefaltet, dass sich die Befestigungsabschnitte zwischen zwei Paketabschnitten befinden. Diese Paketabschnitte definieren einen Erstöffnungsbereich, d.h. einen Bereich des Luftsackpakets, in welchem sich das Luftsackpaket im Falle eines Aufblasens des Luftsacks als erstes entfaltet.

Der Luftsack kann beispielsweise so zusammengefaltet sein, dass die Außenseite des Luftsackpaktes etwa eine U-Form beschreibt. Die Paketabschnitte bilden dabei die freien Endbereiche der Schenkel der U-Form, während es sich bei dem Erstöffnungsbereich um die offene Seite der U-Form handelt. Um den so gefalteten Luftsack zusammenzuhalten, braucht das Luftsackpaket lediglich im Erstöffnungsbereich verschlossen zu werden. Dadurch ist das Haltemittel noch kleiner dimensionierbar und das Luftsackmodul mit einer noch kleineren Baugröße und mit einem noch geringeren Materialaufwand, im Ergebnis also noch kostengünstiger herstellbar.

Vorteilhafterweise umgreift das Haltemittel das Luftsackpaket im Erstöffnungsbereich. Das Luftsackpaket kann dabei gewissermaßen spangenartig durch das Haltemittel zusammengehalten werden.

Gemäß einer weiteren Ausführungsform weist das Haltemittel Aussparungen für die Befestigungsabschnitte auf. Auf diese Weise braucht das Haltemittel nicht aufwändig um die Befestigungsabschnitte herumgeführt zu werden, wenn sich das Haltemittel in Richtung einer Faltachse gesehen entlang eines größeren Teils der Länge des Luftsackpakets oder sogar über die gesamte Länge des Luftsackpakets erstreckt. Dadurch ist gewährleistet, dass das Luftsackpaket auch im Bereich der Befestigungsabschnitte sicher zusammengehalten wird.

Haltemittelabschnitte, die insbesondere durch die Bildung von Aussparungen des Haltemittels für die Befestigungsabschnitte gebildet sind, können mit jeweils einem Befestigungsabschnitt fest verbunden, z.B. vernäht und/oder verklebt, sein. Das Haltemittel ist also nicht nur an den Paketabschnitten, sondern auch an den Befestigungsabschnitten befestigt.

Gemäß einer weiteren Ausführungsform weist das Haltemittel Öffnungen auf, durch die sich die Befestigungsabschnitte hindurch erstrecken. Dies ermöglicht ebenfalls eine Erstreckung des Haltemittels in Richtung einer Faltachse des Luftsackpakets gesehen entlang des Luftsackpakets, ohne dass das Haltemittel im Bereich der Befestigungsabschnitte unterbrochen werden muss. Dadurch ist ein sicherer Verschluss des Luftsackpakets auch in unmittelbarer Umgebung der Befestigungsabschnitte sichergestellt. Ferner ist das Haltemittel durch die sich durch die Öffnungen hindurch erstreckenden Befestigungsabschnitte bei einer Auslösung des Luftsackmoduls an dem Luftsackmodul gesichert.

Das Haltemittel kann ein Klebestreifen sein. Ein derartiges Haltemittel ist nicht nur besonders preisgünstig, sondern es lässt sich auch besonders einfach verarbeiten, da es lediglich so an dem zusammengefalteten Luftsack befestigt werden muss, dass es den Erstöffnungsbereich des Luftsackpakets überbrückt. Das Luftsackmodul ist dadurch insgesamt mit einem noch geringeren wirtschaftlichen Aufwand herstellbar.

Gemäß einer weiteren Ausführungsform ist das Haltemittel zumindest teilweise zwischen die Paketabschnitte eingebracht. Ein derartiges Haltemittel umgreift die den Erstöffnungsbereich definierenden Paketabschnitte also nicht, sondern ist direkt zwischen diesen angeordnet.

Bei einem derartigen Haltemittel kann es sich um eine Klebewulst handeln, die z.B. dadurch erzeugt wird, dass eine ausreichende Menge eines geeigneten Klebstoffes zwischen die Paketabschnitte eingebracht, insbesondere eingespritzt, wird.

Vorzugsweise ist das Haltemittel derart an den Befestigungsabschnitten vorbeigeführt, dass es zumindest auf einer Seite des jeweiligen Befestigungsabschnitts mit einem der Paketabschnitte zusammenwirkt. Dadurch kann sich das Haltemittel in Richtung einer Faltachse gesehen über im Wesentlichen die gesamte Länge des Luftsackpakets erstrecken, ohne dabei im Bereich der Befestigungsabschnitte eine Unterbrechung zu erfahren. Das Luftsackpaket kann also über seine gesamte Länge wirksam verschlossen werden.

Besonders vorteilhaft ist es ferner, wenn das Haltemittel eine Solltrennstelle und insbesondere eine Reißnaht aufweist. Eine derartige Solltrennstelle erleichtert eine Öffnung des Haltemittels und somit das Auseinanderfalten des Luftsackpakets bei einem Unfall. Im Ergebnis wird dadurch eine schnellere Expansion des Luftsacks im Falle einer Aktivierung des Luftsackmoduls ermöglicht.

Nachfolgend wird die Erfindung rein beispielhaft anhand vorteilhafter Ausführungsformen unter Bezugnahme auf die Zeichnung beschrieben.

### Es zeigen:

- Fig. 1: eine Explosionsansicht einer ersten Ausführungsform des erfindungsgemäßen Luftsackmoduls;
- Fig. 2: eine perspektivische Ansicht des Luftsackmoduls von Fig. 1;
- Fig. 3: eine Explosionsansicht einer zweiten Ausführungsform des erfindungsgemäßen Luftsackmoduls;
- Fig. 4: eine perspektivische Ansicht des Luftsackmoduls von Fig. 3;
- Fig. 5: (a) eine Querschnittsansicht und (b) eine perspektivische Ansicht einer dritten Ausführungsform des erfindungsgemäßen Luftsackmoduls;
- Fig. 6: (a) eine Querschnittsansicht und (b) eine perspektivische Ansicht einer vierten Ausführungsform des erfindungsgemäßen Luftsackmoduls; und
- Fig. 7: (a) eine Querschnittsansicht und (b) eine perspektivische Ansicht einer fünften Ausführungsform des erfindungsgemäßen Luftsackmoduls.

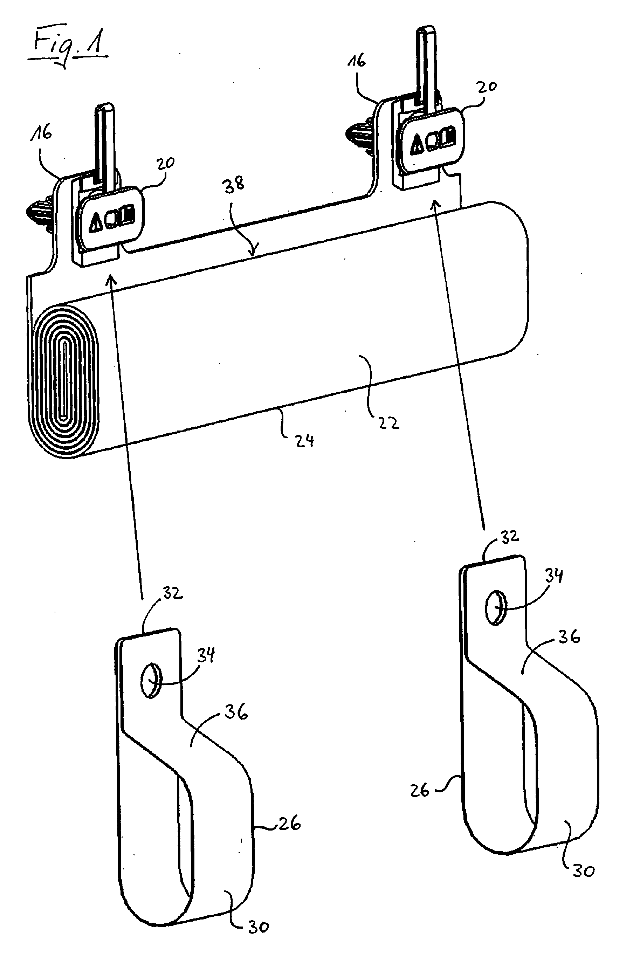

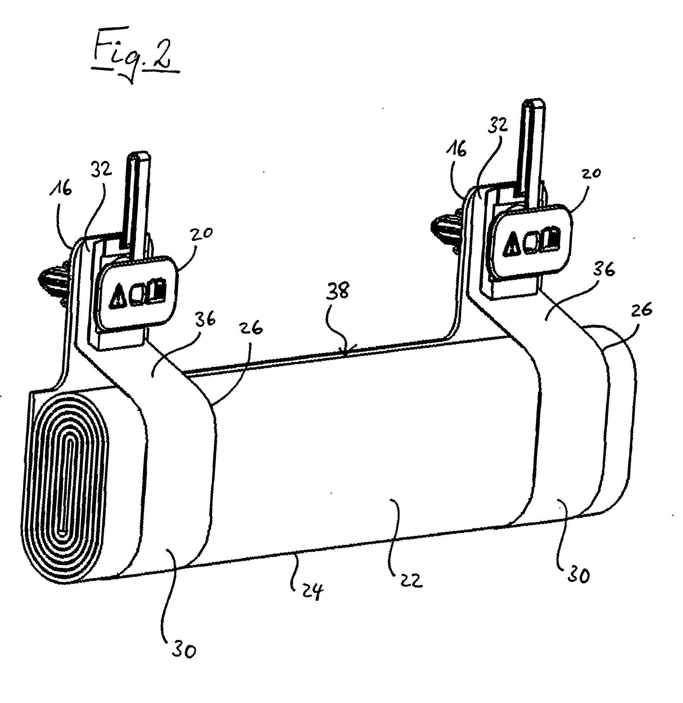

In Fig. 1 und 2 ist eine erste Ausführungsform des erfindungsgemäßen Luftsackmoduls 10 dargestellt. Das Luftsackmodul 10 ist zur Befestigung an einem Dachrahmen eines Kraftfahrzeugs vorgesehen, es handelt sich mit anderen Worten also um einen so genannten "roof rail airbag". Grundsätzlich kann das Luftsackmodul aber auch einen Seitenairbag bilden oder zur Anbringung an einer Instrumententafel vorgesehen sein.

Das Luftsackmodul 10 umfasst einen Luftsack 22, der mehrere laschenartig ausgebildete und zueinander beabstandete Befestigungsabschnitte 16 aufweist, welche zur Befestigung des Luftsackmoduls 10 an dem Dachrahmen des Kraftfahrzeugs dienen.

Jeder Befestigungsabschnitt 16 weist einen nicht gezeigten Durchgang auf, durch den sich ein Clipselement 20 hindurch erstreckt, welches zur Fixierung des Luftsackmoduls 10 an dem Dachrahmen des Kraftfahrzeugs dient. Die Befestigungsabschnitte 16 sind integrale Bestandteile der Luftsackhülle. Anstelle des Clipselements 20 kann auch eine Schraube, Niete oder ein anderes geeignetes Befestigungsmittel verwendet werden.

Der Luftsack 22 ist nach Art einer Rollfaltung zu einem Luftsackpaket 24 zusammengefaltet, mit anderen Worten also aufgerollt.

Das Luftsackpaket 24 wird durch ein Haltemittel zusammengehalten, welches bei der in Fig. 1 und 2 dargestellten Ausführungsform durch zwei Schlaufen 26 gebildet ist, die das Luftsackpaket 24 im Bereich der axialen Enden 28 des Luftsackpakets 24 umgeben.

Jede Schlaufe 26 ist aus einem streifenförmigen Materialabschnitt 30 gebildet, der im Bereich seiner freien Enden 32 jeweils eine Öffnung 34 aufweist. Die Materialabschnitte 30 sind integrale Bestandteile der Luftsackhülle und werden beim Zuschneiden oder Zusammennähen des Luftsacks gebildet, und zwar derart, dass sie mit einem Ende mit der eigentlichen Luftsackhülle verbunden sind und nach dem Aufrollen des Luftsackpaketes 24 um dieses herumgelegt und jeweils über die am freien Ende ausgebildete Öffnung 34 mittels des Clipselementes 20 an der jeweiligen Befestigungslasche 16 fixiert werden können. Die Luftsackhülle bildet also mit den Laschen 16 und den Schlaufen 26 ein zusammenhängendes Ganzes. Fig. 1 hat insofern klarstellenden Charakter.

Durch die Clipselemente 20, die durch die Öffnungen 34 der Materialabschnitte 30 und die Durchgänge der Befestigungsabschnitte 16 hindurch gesteckt werden, sind die Materialabschnitte 30 an den Befestigungsabschnitten 16 des Luftsacks 22 fixiert, und das zusammengefaltete Luftsackpaket 24 wird durch die so gebildeten Schlaufen 26 zusammengehalten.

Der Abstand zwischen den Befestigungsabschnitten 16 und somit zwischen den Schlaufen 26 ist so gewählt, dass das Luftsackpaket 24 durch eine dem Luftsack 24 innewohnende Formstabilität und insbesondere durch die Eigenstabilität der Rollfaltung auch zwischen den Befestigungsabschnitten 16 bzw. den Schlaufen 26 in Form gehalten wird. Das Luftsackpaket 24 kann sich mit anderen Worten zwischen den Schlaufen 26 bzw. den Befestigungsabschnitten 16 weder unbeabsichtigt verformen, z.B. durchbiegen, noch unbeabsichtigt entfalten.

Die streifenförmigen Materialabschnitte 30 der Schlaufen 26 weisen jeweils eine Breite auf, die wesentlich kleiner als die Länge des Luftsackpakets 24 in Richtung der Roll- oder Faltachse gesehen ist. Somit wird lediglich ein geringer Anteil der Oberfläche des Luftsackpakets 24 durch die Schlaufen 26 bedeckt.

Damit sich das Luftsackpaket 24 im Falle einer Aktivierung des Luftsackmoduls 10, beispielsweise bei einem Unfall, möglichst verzögerungsfrei entfalten und der Luftsack 22 schnell expandieren kann, weist jede Schlaufe 26 bzw. jeder Materialabschnitt 30 eine nicht gezeigte Solltrennstelle, z.B. eine Reißnaht, auf. Die Solltrennstelle ist vorzugsweise in einem Abschnitt 36 der Schlaufen 26 angeordnet, welcher einen durch den zusammengefalteten Luftsack 22 gebildeten Spalt 38 überbrückt.

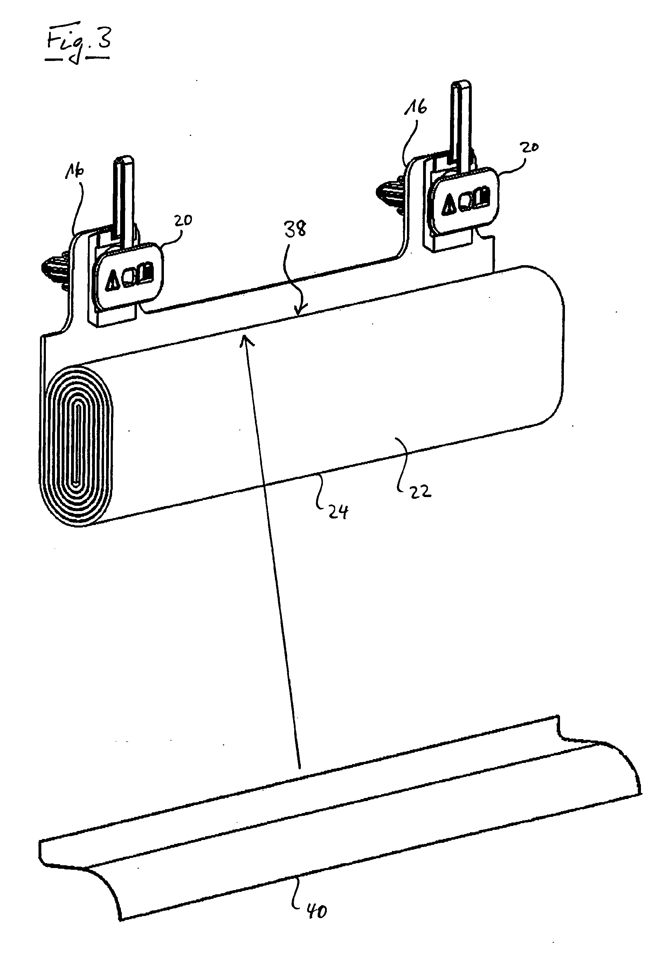

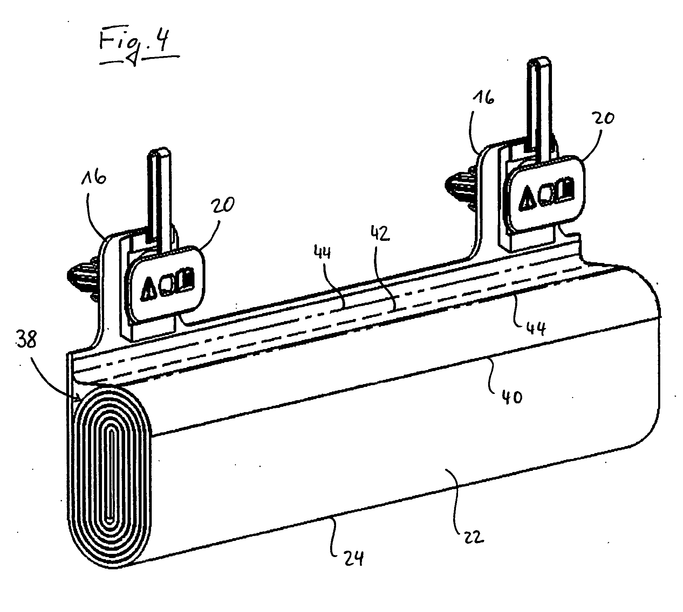

In Fig. 3 und 4 ist eine zweite Ausführungsform des erfindungsgemäßen Luftsackmoduls 10 dargestellt. Das Luftsackmodul 10 gemäß der zweiten Ausführungsform unterscheidet sich von der voranstehend in Verbindung mit Fig. 1 und 2 beschriebenen ersten Ausführungsform lediglich in der Art und Weise, wie das zusammengefaltete Luftsackpaket 24 zusammengehalten wird. Bauteile der zweiten Ausführungsform, welche denjenigen der ersten Ausführungsform in Funktion oder Bauweise entsprechen, sind deshalb mit den gleichen Bezugszeichen gekennzeichnet. Entsprechend dem ersten Ausführungsbeispiel bildet auch hier die Luftsackhülle mit Laschen 16 und Haltestreifen 40 ein zusammenhängendes Ganzes.

Bei dem Luftsackmodul 10 gemäß der zweiten Ausführungsform wird das zusammengefaltete Luftsackpaket 24 durch ein Haltemittel zusammengehalten, welches nicht durch Schlaufen 26, sondern durch einen länglichen Haltestreifen 40 gebildet ist, der im wesentlichen nur den Spalt 38 überbrückt und lediglich an den Spalt 38 angrenzende Bereiche des Luftsacks 22 bedeckt.

Die Breite des Haltestreifens 40 ist dabei so gewählt, dass der Haltestreifen 40 auf beiden Seiten des Spalts 38 jeweils nur mit einem so großen Bereich des Luftsacks 22 verbunden ist, dass eine zuverlässige Verbindung zwischen dem Haltestreifen 40 und dem Luftsack 22 auf beiden Seiten des Spalts 38 dauerhaft sichergestellt ist.

Ein sicherer Zusammenhalt des Luftsackpakets 24 wird bei der zweiten Ausführungsform des Luftsackmoduls im Wesentlichen unabhängig von der Eigenstabilität der Faltung des Luftsackpakets 24 bzw. einer dem Luftsackpaket 24 innewohnenden Formstabilität dadurch erreicht, dass sich der Haltestreifen 40 in Richtung der Rollachse gesehen im Wesentlichen über die gesamte Länge des Luftsackpakets 24 erstreckt. Dabei muss es sich bei dem Haltestreifen 40 nicht notwendigerweise um einen durchgehenden Haltestreifen 40 handeln, wie er in Fig. 3 und 4 dargestellt ist, sondern der Haltestreifen 40 kann sich auch aus mehreren zueinander beabstandeten und über die Länge des Spalts 38 verteilt angeordneten Abschnitten zusammensetzen.

Der Haltestreifen 40 kann auf der einen Seite des Spalts 38 mittels einer Klebe-, Näh-, Heft- oder Nietverbindung an dem Luftsack 22 angebracht sein.

Ferner umfasst auch der Haltestreifen 40 eine Solltrennstelle 42, bei dem vorliegenden Ausführungsbeispiel eine Reißnaht, die im Bereich des Spalts 38 angeordnet ist und sich in Richtung der Rollachse gesehen über die gesamte Länge des Haltestreifens 40 erstreckt (Fig. 4).

Die in Fig. 4 gezeigten und parallel zur Solltrennstelle 42 verlaufenden strichpunktierten Linien symbolisieren die Stellen 44, an denen der Haltestreifen 40 ausgehend von dem Spalt 38 mit dem Luftsack 22 in Kontakt gerät.

Alternativ oder zusätzlich zu einer Solltrennstelle 42 kann eine Klebeverbindung zwischen Haltestreifen 40 und Luftsack 22 derart ausgebildet sein, dass der Haltestreifen 40 das Luftsackpaket 24 im zusammengefalteten Zustand des Luftsacks 22 zwar sicher zusammenhält, sich bei einem sich aufblasenden Luftsack 22 aber leicht von dem Luftsack 22 löst.

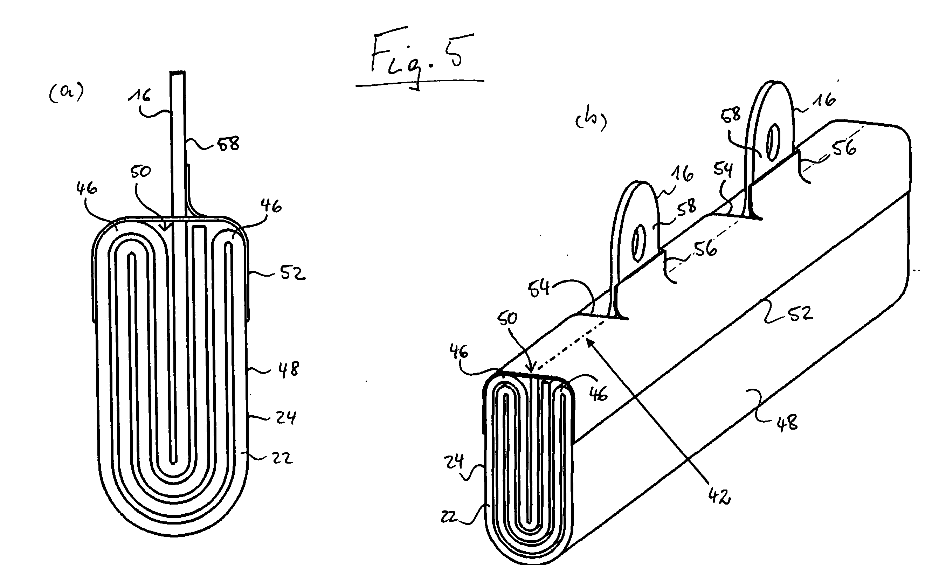

In Fig. 5 ist eine dritte Ausführungsform des erfindungsgemäßen Luftsackmoduls 10 dargestellt. Anders als bei den voranstehend beschriebenen Ausführungsformen ist der Luftsack 22 der dritten Ausführungsform nicht zusammengerollt, sondern durch mehrfaches Umschlagen so gefaltet, dass Paketabschnitte 46 des Luftsackpakets 24 auf gegenüberliegenden Seiten von laschenartig ausgebildeten Befestigungsabschnitten 16 angeordnet sind. Wie bei den vorherigen Ausführungsformen werden die Befestigungsabschnitte 16 von der Luftsackhülle gebildet.

Eine Außenseite 48 des zusammengefalteten Luftsacks 22 beschreibt etwa eine U-Form, wobei die Paketabschnitte 46 die freien Endbereiche der Schenkel der U-Form bilden.

Die Paketabschnitte 46 begrenzen einen Erstöffnungsbereich 50 des Luftsackpakets 24, d.h. einen Bereich, in dem sich das Luftsackpaket 24 bei Auslösung des Luftsackmoduls 10 als erstes entfaltet. Dies geschieht, indem sich die Paketabschnitte 46 beim Aufblasen des Luftsacks 22 auseinander bewegen.

Im zusammengefalteten Zustand des Luftsacks 22 sind die Befestigungsabschnitte 16 zwischen den Paketabschnitten 46, d.h. also im Erstöffnungsbereich 50 angeordnet.

Um den gefalteten Luftsack 22 zusammenzuhalten und das Luftsackpaket 24 zu verschließen, ist ein Haltemittel 52 vorgesehen, welches den Erstöffnungsbereich 50 überspannt und das Luftsackpaket 24 im Erstöffnungsbereich 50 kappenartig umfasst.

Bei der in Fig. 5 dargestellten Ausführungsform ist das Haltemittel 52 durch einen Klebestreifen gebildet, der im Erstöffnungsbereich 50 mit den Paketabschnitten 46 verklebt ist. Der Klebestreifen 52 erstreckt sich in Richtung einer Faltachse des Luftsackpakets 24 gesehen über im Wesentlichen die gesamte Länge des Luftsackpaketes 24.

Im Bereich jedes Befestigungsabschnitts 16 weist der Klebestreifen 52 eine Aussparung 54 für den jeweiligen Befestigungsabschnitt 16 auf. Die Aussparungen 54 sind jeweils durch das Ausschneiden eines sich quer zur Längserstreckung des Klebestreifens 52 erstreckenden Haltemittelabschnitts 56 gebildet, der vom Luftsackpaket 24 weg gebogen, d.h. also - in der Zeichnung nach oben - ausgestellt ist. Die Haltemittelabschnitte 56 liegen an einer Seite 58 ihres jeweiligen Befestigungsabschnitts 16 an und sind dort mit diesem verklebt. Alternativ oder zusätzlich können die Haltemittelabschnitte 56 auch mit ihrem jeweiligen Befestigungsabschnitt 16 vernäht sein.

Bei der in Fig. 5 dargestellten Ausführungsform sind die Aussparungen 54 alle auf der gleichen Seite des Klebestreifens 52 vorgesehen, und die Haltemittelabschnitte 56 liegen alle auf der gleichen Seite an den Befestigungsabschnitten 16 an. Grundsätzlich ist es aber auch möglich, die Aussparungen 54 von unterschiedlichen Rändern des Klebestreifens 52 ausgehend vorzusehen, so dass auch die Haltemittelabschnitte 56 an unterschiedlichen Seiten der Befestigungsabschnitte 16 anliegen können.

Um das Öffnen des Luftsackpakets 24 im Falle einer Auslösung des Luftsackmoduls 10 zu erleichtern, weist der Klebestreifen 52 eine im Erstöffnungsbereich 50 angeordnete und sich parallel zu einer Faltachse des Luftsackpakets 24 erstreckende Solltrennstelle 42 auf, beispielsweise eine Reißnaht. Die Solltrennstelle 42 kann sich über die gesamte Länge des Klebestreifens 52 erstrecken oder auch nur abschnittsweise vorgesehen sein.

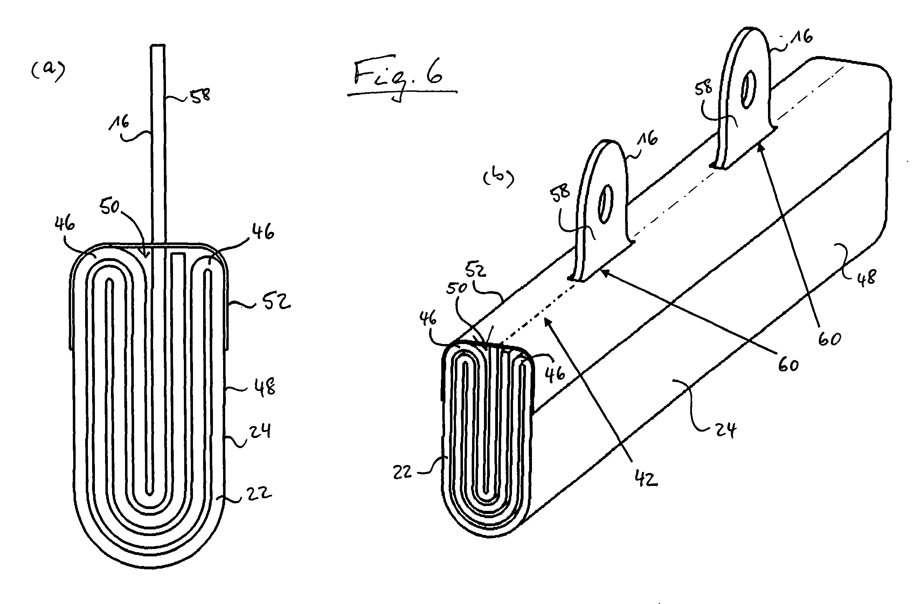

In Fig. 6 ist eine vierte Ausführungsform des erfindungsgemäßen Luftsackmoduls 10 dargestellt, bei welcher der Luftsack 22 wie bei der in Fig. 5 dargestellten dritten Ausführungsform gefaltet ist. Entsprechend der dritten Ausführungsform wird auch der zusammengefaltete Luftsack 22 der vierten Ausführungsform durch einen das Luftsackpaket 24 im Erstöffnungsbereich 50 umgreifenden Klebestreifen 52 zusammengehalten. Auch der Klebestreifen 52 der vierten Ausführungsform ist mit einer Solltrennstelle 42 versehen.

Im Unterschied zur dritten Ausführungsform weist der Klebestreifen 52 der in Fig. 6 dargestellten Ausführungsform jedoch keine Aussparungen 54 für die Befestigungsabschnitte 16, sondern Öffnungen 60 auf, durch die sich die Befestigungsabschnitte 16 hindurch erstrecken. Wie Fig. 6 zeigt, handelt es sich bei den Öffnungen 60 um schlitzartige Längsöffnungen, die derart dimensioniert sind, dass der Klebestreifen 52 die Befestigungsabschnitte 16 möglichst eng umschließt.

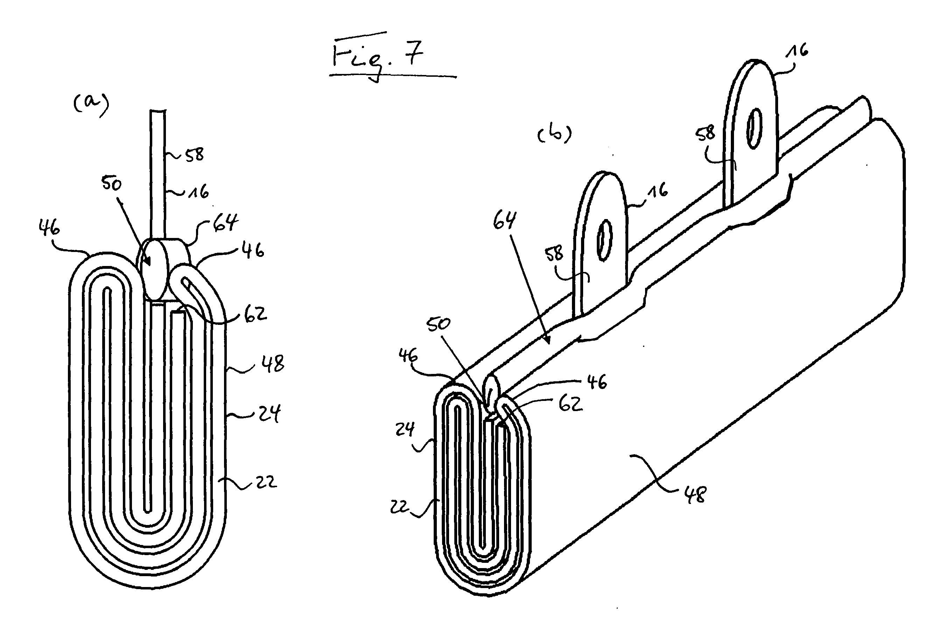

In Fig. 7 ist eine fünfte Ausführungsform des erfindungsgemäßen Luftsackmoduls 10 dargestellt, dessen Luftsack 22 ähnlich wie bei den in Fig. 5 und 6 dargestellten Ausführungsformen gefaltet ist. Anders als bei der dritten und vierten Ausführungsform ist das den Befestigungsabschnitten 16 abgewandte Ende 62 des Luftsacks 22 jedoch etwas in das Innere des Luftsackpakets 24 zurück versetzt und somit nicht Teil der den Erstöffnungsbereich definierenden Paketabschnitte 46.

Im weiteren Unterschied zu den in Fig. 5 und 6 dargestellten Ausführungsformen ist das Luftsackpaket 24 gemäß der fünften Ausführungsform nicht durch einen Klebestreifen 52, sondern durch eine Klebewulst 64 verschlossen, welche die Paketabschnitte 64 im Erstöffnungsbereich 50 zusammenhält. Die Klebewulst 64 kann beispielsweise durch eine Klebstoffmasse gebildet sein, die im Erstöffnungsbereich 50 zwischen die Paketabschnitte 46 eingebracht, beispielsweise eingespritzt, wird.

Wie in Fig. 7 dargestellt ist, erstreckt sich die Klebewulst 64 in Richtung einer Faltachse des Luftsackpakets 24 gesehen im Wesentlichen über die gesamte Länge des Luftsackpakets 24, wobei alternativ auch ein abschnittsweises oder punktförmiges Verkleben denkbar ist. Dabei ist die Klebewulst 64 im Bereich der Befestigungsabschnitte 16 jeweils an einer Seite 58 des jeweiligen Befestigungsabschnitts 16 vorbei geführt. In diesem Bereich sind also nicht die Luftsackpakete 46 miteinander verklebt, sondern einer der beiden Paketabschnitte 46 ist an dem jeweiligen Befestigungsabschnitt 16 fixiert.

Bei der in Fig. 7 gezeigten Ausführungsform ist die Klebewulst 64 stets auf der gleichen Seite an den Befestigungsabschnitten 16 vorbei geführt. Grundsätzlich ist es aber auch möglich, die Klebewulst 64 auf jeweils unterschiedlichen Seiten an den Befestigungsabschnitten 16 vorbei zuführen, beispielsweise abwechselnd vor bzw. hinter den Befestigungslaschen 16.

### Bezugszeichenliste

- 10: Luftsackmodul
- 16: Befestigungsabschnitt
- 20: Clipselement
- 22: Luftsack
- 24: Luftsackpaket
- 26: Schlaufe
- 30: Materialabschnitt
- 32: Ende
- 34: Öffnung
- 36: Abschnitt
- 38: Spalt
- 40: Haltestreifen
- 42: Solltrennstelle
- 44: Kontaktstelle
- 46: Paketabschnitt
- 48: Außenseite
- 50: Erstöffnungsbereich
- 52: Haltemittel
- 54: Aussparung
- 56: Haltemittelabschnitt
- 58: Seite
- 60: Öffnung
- 62: Ende
- 64: Klebewulst

## Patentansprüche

1. Luftsackmodul (10) für ein Kraftfahrzeug mit einem aufblasbaren Luftsack (22), der im Montagezustand zu einem Paket (24) zusammengefaltet ist, das von einem lediglich stellenweise wirksamen Haltemittel (26, 40, 52, 64) zusammengehalten ist, welches verglichen mit der Paketoberfläche kleine Abmessungen aufweist und zumindest einen zusammenhängenden, verglichen mit den Abmessungen des Haltemittels (26, 40) großen Bereich der Paketoberfläche freilässt.

2. Luftsackmodul (10) nach Anspruch 1,
**dadurch gekennzeichnet, dass**
das Haltemittel (26, 40, 52, 64) unter Ausnutzung einer dem Luftsackpaket (24) zumindest im freigelassenen Bereich innewohnenden Formstabilität positioniert ist.

3. Luftsackmodul (10) nach Anspruch 1 oder 2,
**dadurch gekennzeichnet, dass**
das Haltemittel (26, 40, 52, 64) streifenförmig mit einer Breite ausgebildet ist, die wesentlich kleiner als die Länge und/oder der Umfang des Luftsackpakets (24) ist.

4. Luftsackmodul (10) nach einem der vorherigen Ansprüche,
**dadurch gekennzeichnet, dass**
der Luftsack (22) nach Art einer Rollfaltung zusammengefaltet ist.

5. Luftsackmodul (10) nach einem der vorherigen Ansprüche,
**dadurch gekennzeichnet, dass**
das Haltemittel (26) das Luftsackpaket (24) manschettenartig umgibt.

6. Luftsackmodul (10) nach einem der vorherigen Ansprüche,
**dadurch gekennzeichnet, dass**
das Haltemittel eine Schlaufe (26) oder mehrere zueinander beabstandete Schlaufen (26) umfasst.

7. Luftsackmodul (10) nach Anspruch 5 oder 6,
**dadurch gekennzeichnet, dass**
wenigstens ein Ende (32) der oder jeder Schlaufe (26) bzw. Manschette an einem insbesondere laschenartigen Befestigungsabschnitt (16) des Luftsacks (22) angebracht ist, welcher zur Befestigung des Luftsacks (22) an einem Kraftfahrzeug, insbesondere an einem Dachrahmen des Kraftfahrzeugs, vorgesehen ist.

8. Luftsackmodul (10) nach Anspruch 7,
**dadurch gekennzeichnet, dass**
das Ende (32) der oder jeder Schlaufe (26) bzw. Manschette mittels eines zur Befestigung des Luftsackmoduls (10) an einem Kraftfahrzeug vorgesehenen Befestigungsmittels (20), z.B. eines Clips, an dem Befestigungsabschnitt (16) des Luftsacks (22) angebracht ist.

9. Luftsackmodul (10) nach einem der Ansprüche 5 bis 7,
**dadurch gekennzeichnet, dass**
die oder jede Schlaufe (26) bzw. Manschette in einem zwischen ihren Enden gelegenen Bereich mit dem zusammengefalteten Luftsack (22) verklebt ist.

10. Luftsackmodul (10) nach einem der Ansprüche 1 bis 4,
**dadurch gekennzeichnet, dass**
das Haltemittel (40) lediglich solche Bereiche des Luftsacks (22) abdeckt, welche an einen durch den zusammengefalteten Luftsack (22) gebildeten Spalt (38) angrenzen.

11. Luftsackmodul (10) nach Anspruch 10,
**dadurch gekennzeichnet, dass**
das Haltemittel (40) den Spalt (38) zumindest abschnittsweise und bevorzugt über annähernd dessen gesamte Länge überbrückt.

12. Luftsackmodul (10) nach einem der vorherigen Ansprüche,
**dadurch gekennzeichnet, dass**
das Haltemittel (26, 40) im Bereich eines Endes mittels einer Klebe-, Näh-, Heft- oder Nietverbindung an dem Luftsack (22) befestigt ist.

13. Luftsackmodul (10) nach einem der vorherigen Ansprüche,
**dadurch gekennzeichnet, dass**
das Haltemittel (26, 40, 52) ein Textilmaterial, z.B. ein Gewebe oder ein Vlies, aufweist.

14. Luftsackmodul (10) nach einem der Ansprüche 1 bis 3,
**dadurch gekennzeichnet, dass**
der Luftsack (22) derart zusammengefaltet ist, dass auf gegenüberliegenden Seiten von insbesondere laschenartigen Befestigungsabschnitten (16) des Luftsacks (22) Paketabschnitte (46) angeordnet sind, welche einen Erstöffnungsbereich (50) definieren, und das Haltemittel (52) lediglich im Erstöffnungsbereich (50) wirksam ist.

15. Luftsackmodul (10) nach Anspruch 14,
**dadurch gekennzeichnet, dass**
das Haltemittel (52) das Luftsackpaket (24) im Erstöffnungsbereich (50) umgreift.

16. Luftsackmodul (10) nach Anspruch 14 oder 15,
**dadurch gekennzeichnet, dass**
das Haltemittel (52) Aussparungen (54) für die Befestigungsabschnitte (16) aufweist.

17. Luftsackmodul (10) nach einem der Ansprüche 14 bis 16,
**dadurch gekennzeichnet, dass**
Haltemittelabschnitte (56), die insbesondere durch die Bildung von Aussparungen (54) des Haltemittels (52) für die Befestigungsabschnitte (16) gebildet sind, mit jeweils einem Befestigungsabschnitt (16) fest verbunden, z.B. vernäht und/oder verklebt, sind.

18. Luftsackmodul (10) nach Anspruch 14 oder 15,
**dadurch gekennzeichnet, dass**
das Haltemittel (52) Öffnungen (60) aufweist, durch die sich die Befestigungsabschnitte (16) hindurch erstrecken.

19. Luftsackmodul (10) nach einem der Ansprüche 14 bis 18,
**dadurch gekennzeichnet, dass**
das Haltemittel (52) ein Klebestreifen ist.

20. Luftsackmodul (10) nach Anspruch 14,
**dadurch gekennzeichnet, dass**
das Haltemittel (64) zumindest teilweise zwischen die Paketabschnitte (46) eingebracht ist.

21. Luftsackmodul (10) nach Anspruch 20,
**dadurch gekennzeichnet, dass**
das Haltemittel (64) derart an den Befestigungsabschnitten (16) vorbei geführt ist, dass es zumindest auf einer Seite (58) des jeweiligen Befestigungsabschnitts (16) mit einem der Paketabschnitte (46) zusammenwirkt.

22. Luftsackmodul (10) nach Anspruch 20 oder 21,
**dadurch gekennzeichnet, dass**
das Haltemittel (64) eine Klebewulst ist.

23. Luftsackmodul (10) nach einem der Ansprüche 1 bis 19,
**dadurch gekennzeichnet, dass**
das Haltemittel (26, 40) eine Solltrennstelle (42) und insbesondere eine Reißnaht aufweist.

24. Luftsackmodul (10) nach einem der vorherigen Ansprüche,
**dadurch gekennzeichnet, dass**
das Haltemittel (26, 40) und/oder ein insbesondere laschenartiger Befestigungsabschnitt (16) des Luftsacks ein Bestandteil der entsprechend zugeschnittenen und/oder zusammengenähten Luftsackhülle ist.

## Geänderte Patentansprüche

### Geänderte Patentansprüche gemäss Regel 86(2) EPÜ.

**1.** Luftsackmodul (10) für ein Kraftfahrzeug mit einem aufblasbaren Luftsack (22), der im Montagezustand zu einem Paket (24) zusammengefaltet ist, das von einem lediglich stellenweise wirksamen Haltemittel (26, 40, 52, 64) zusammengehalten ist, welches verglichen mit der Paketoberfläche kleine Abmessungen aufweist und zumindest einen zusammenhängenden, verglichen mit den Abmessungen des Haltemittels (26, 40) großen Bereich der Paketoberfläche freilässt,
**dadurch gekennzeichnet, dass**
das Haltemittel (40) lediglich solche Bereiche des Luftsacks (22) abdeckt, welche an einen durch den zusammengefalteten Luftsack (22) gebildeten Spalt (38) angrenzen.

**2.** Luftsackmodul (10) nach Anspruch 1,
**dadurch gekennzeichnet, dass**
der Luftsack (22) nach Art einer Rollfaltung zusammengefaltet ist.

**3.** Luftsackmodul (10) nach Anspruch 1 oder 2,
**dadurch gekennzeichnet, dass**
das Haltemittel (40) den Spalt (38) zumindest abschnittsweise und bevorzugt über annähernd dessen gesamte Länge überbrückt.

**4.** Luftsackmodul (10) nach einem der vorherigen Ansprüche,
**dadurch gekennzeichnet, dass**
das Haltemittel (26, 40) im Bereich eines Endes mittels einer Klebe-, Näh-, Heft- oder Nietverbindung an dem Luftsack (22) befestigt ist.

**5.** Luftsackmodul (10) nach einem der vorherigen Ansprüche,
**dadurch gekennzeichnet, dass**
das Haltemittel (26, 40, 52) ein Textilmaterial, z.B. ein Gewebe oder ein Vlies, aufweist.

**6.** Luftsackmodul (10) für ein Kraftfahrzeug mit einem aufblasbaren Luftsack (22), der im Montagezustand zu einem Paket (24) zusammengefaltet ist, das von einem lediglich stellenweise wirksamen Haltemittel (26, 40, 52, 64) zusammengehalten ist, welches verglichen mit der Paketoberfläche kleine Abmessungen aufweist und zumindest einen zusammenhängenden, verglichen mit den Abmessungen des Haltemittels (26; 40) großen Bereich der Paketoberfläche freilässt,
**dadurch gekennzeichnet, dass**
der Luftsack (22) derart zusammengefaltet ist, dass auf gegenüberliegenden Seiten von insbesondere laschenartigen Befestigungsabschnitten (16) des Luftsacks (22) Paketabschnitte (46) angeordnet sind, welche einen Erstöffnungsbereich (50) definieren, und das Haltemittel (52) lediglich im Erstöffnungsbereich (50) wirksam ist.

**7.** Luftsackmodul (10) nach Anspruch 6,
**dadurch gekennzeichnet, dass**
das Haltemittel (52) das Luftsackpaket (24) im Erstöffnungsbereich (50) umgreift.

**8.** Luftsackmodul (10) nach Anspruch 6 oder 7,
**dadurch gekennzeichnet, dass**
das Haltemittel (52) Aussparungen (54) für die Befestigungsabschnitte (16) aufweist.

**9.** Luftsackmodul (10) nach einem der Ansprüche 6 bis 8,
**dadurch gekennzeichnet, dass**
Haltemittelabschnitte (56), die insbesondere durch die Bildung von Aussparungen (54) des Haltemittels (52) für die Befestigungsabschnitte (16) gebildet sind, mit jeweils einem Befestigungsabschnitt (16) fest verbunden, z.B. vernäht und/oder verklebt, sind.

**10.** Luftsackmodul (10) nach Anspruch 6 oder 7,
**dadurch gekennzeichnet, dass**
das Haltemittel (52) Öffnungen (60) aufweist, durch die sich die Befestigungsabschnitte (16) hindurch erstrecken.

**11.** Luftsackmodul (10) nach einem der Ansprüche 6 bis 10,
**dadurch gekennzeichnet, dass**
das Haltemittel (52) ein Klebestreifen ist.

**12.** Luftsackmodul (10) nach Anspruch 6,
**dadurch gekennzeichnet, dass**
das Haltemittel (64) zumindest teilweise zwischen die Paketabschnitte (46) eingebracht ist.

**13.** Luftsackmodul (10) nach Anspruch 12,
**dadurch gekennzeichnet, dass**
das Haltemittel (64) derart an den Befestigungsabschnitten (16) vorbei geführt ist, dass es zumindest auf einer Seite (58) des jeweiligen Befestigungsabschnitts (16) mit einem der Paketabschnitte (46) zusammenwirkt.

**14.** Luftsackmodul (10) nach Anspruch 12 oder 13,
**dadurch gekennzeichnet, dass**
das Haltemittel (64) eine Klebewulst ist.

**15.** Luftsackmodul (10) nach einem der Ansprüche 1 bis 11,
**dadurch gekennzeichnet, dass**
das Haltemittel (26, 40) eine Solltrennstelle (42) und insbesondere eine Reißnaht aufweist.

**16.** Luftsackmodul (10) nach einem der vorherigen Ansprüche,
**dadurch gekennzeichnet, dass**
das Haltemittel (26, 40) und/ oder ein insbesondere laschenartiger Befestigungsabschnitt (16) des Luftsacks ein Bestandteil der entsprechend zugeschnittenen und/oder zusammengenähten Luftsackhülle ist.

**17.** Luftsackmodul (10) nach einem der vorherigen Ansprüche,
**dadurch gekennzeichnet, dass**
das Haltemittel (26, 40, 52, 64) unter Ausnutzung einer dem Luftsackpaket (24) zumindest im freigelassenen Bereich innewohnenden Formstabilität positioniert ist.

**18.** Luftsackmodul (10) nach einem der vorherigen Ansprüche,
**dadurch gekennzeichnet, dass**
das Haltemittel (26, 40, 52, 64) streifenförmig mit einer Breite ausgebildet ist, die wesentlich kleiner als die Länge und/oder der Umfang des Luftsackpakets (24) ist.
